# EUROPÄISCHE PATENTANMELDUNG

(11) **EP 4 635 796 A1**
(43) Veröffentlichungstag der Anmeldung: **22.10.2025**
(21) Anmeldenummer: 24170613.4
(22) Anmeldetag: 16.04.2024
(51) Int. Cl.: B60Q 1/00, B60Q 1/26, B60Q 1/28

(54) **BELEUCHTUNGSVORRICHTUNG FÜR EIN KRAFTFAHRZEUG**

(71) Anmelder: ZKW Group GmbH, 3250 Wieselburg (AT); RESRG Automotive SE & Co. KG, 95111 Rehau (DE)
(72) Erfinder: Reichstein, Johann, 95448 Bayreuth (DE); Bierwipfl, Christoph, 3376 St. Martin (AT); Rappersberger, Patrick, 3100 St. Pölten (AT)
(74) Vertreter: Patentanwaltskanzlei Matschnig & Forsthuber OG

(57) **Zusammenfassung**

Beleuchtungsvorrichtung (1) für ein Kraftfahrzeug, wobei die Beleuchtungsvorrichtung (1) ein Gehäuse (2) mit einem Gehäusekörper (2a) und einer Abschlussscheibe (2b), ein erstes Leuchtmittel (3a), welches dazu eingerichtet ist, Licht zu erzeugen auf die Abschlussscheibe (2b) anzustrahlen, ein zweites Leuchtmittel (3b), welches dazu eingerichtet ist, Licht zu erzeugen und entlang einer zweiten Lichtabstrahlrichtung (x2), abzustrahlen, umfasst, wobei das Gehäuse (2) einen Befestigungsabschnitt (4) aufweist, welcher zur Befestigung eines Lichtleitelements (5) an dem Gehäuse (2) eingerichtet ist, wobei das zweite Leuchtmittel (3b) relativ zu dem Befestigungsabschnitt (4) derart angeordnet ist, dass in einem Befestigungszustand, in dem ein Lichtleitelement (5) an dem Gehäuses (2) befestigt ist, von dem zweiten Leuchtmittel (3b) erzeugtes Licht auf einen Lichteinkoppelabschnitt (5b) des Lichtleitelements (5) trifft.

## Beschreibung

### Technisches Gebiet

Die Erfindung betrifft Beleuchtungsvorrichtung für ein Kraftfahrzeug, wobei die Beleuchtungsvorrichtung Folgendes umfasst:
ein Gehäuse mit einem Gehäuseinnenraum, wobei das Gehäuse einen, insbesondere für sichtbares Licht, intransparenten Gehäusekörper und eine, insbesondere für sichtbares Licht, transparente Abschlussscheibe umfasst, wobei der Gehäusekörper und die Abschlussscheibe das Gehäuse ausbilden und den Gehäuseinnenraum umschließen,
ein erstes Leuchtmittel, welches innerhalb des Gehäuseinnenraums des Gehäuses angeordnet und dazu eingerichtet ist, Licht zu erzeugen und entlang einer ersten Lichtabstrahlrichtung, welche zur Abschlussscheibe hin orientiert ist, abzustrahlen, wobei das erste Leuchtmittel zur Erzeugung einer Lichtfunktion, insbesondere einer Kraftfahrzeugscheinwerfer- Lichtfunktion, beispielsweise ein Abblendlicht oder ein Fernlicht, eingerichtet ist, wobei das erste Leuchtmittel derart in dem Gehäuse angeordnet ist, dass die Lichtfunktion ausbildendes Licht, ausgehend von dem ersten Leuchtmittel, entlang der ersten Lichtabstrahlrichtung, durch die Abschlussscheibe hindurch, insbesondere in einen Verkehrsraum, abgestrahlt wird,
ein zweites Leuchtmittel, welches innerhalb des Gehäuseinnenraums des Gehäuses angeordnet und dazu eingerichtet ist, Licht zu erzeugen und entlang einer zweiten Lichtabstrahlrichtung, welche vorzugsweise von der ersten Lichtabstrahlrichtung unterschiedlich ist, abzustrahlen.

Die Erfindung betrifft weiters ein System, umfassend zumindest eine Beleuchtungsvorrichtung, ein Lichtleitelement und eine Kraftfahrzeugkomponente.

Die Erfindung betrifft weiters ein Kraftfahrzeug, umfassend eine Beleuchtungsvorrichtung oder ein System.

### Technischer Hintergrund

Im Stand der Technik sind gattungsgemäße Beleuchtungsvorrichtungen, welche mehr als ein Leuchtmittel aufweisen bekannt. Üblicherweise werden verschiedene Leuchtmittel für verschiedene Lichtfunktionen eines Kraftfahrzeugs verwendet. Soll nun zusätzlich auch eine Komponente eines Kraftfahrzeugs, in welchem die Beleuchtungsvorrichtung eingebaut ist, beleuchtet werden, gehört es zu den gängigen Lösungen, dass eine zusätzliche Beleuchtungsvorrichtung, welche zur Beleuchtung der Komponente eingerichtet ist, im Kraftfahrzeug verbaut wird. Bekannte Lösungen haben somit eine erste Beleuchtungsvorrichtung für die KFZ-Lichtfunktionen, wie beispielsweise Abblendlicht und Fernlicht, und eine zusätzliche Beleuchtungsvorrichtung, die räumlich und steuerungstechnisch von der ersten Beleuchtungsvorrichtung getrennt ist, für andere Beleuchtungsfunktionen, beispielsweise dekorative Innen- oder Außenbeleuchtungen. Nachteiligerweise wird für eine derartige zusätzliche Beleuchtungsvorrichtung eine eigene elektronische Steuerung, Befestigungsmittel, Leuchtmittel usw. benötigt. Zusätzliche Beleuchtungsvorrichtungen müssen überdies vor Umwelteinflüssen und vor Beschädigungen geschützt werden.

Die Aufgabe der vorliegenden Erfindung besteht darin, die Nachteile des Standes der Technik zu lindern bzw. zu beseitigen. Die Erfindung setzt sich daher insbesondere zum Ziel, eine Beleuchtungsvorrichtung zu schaffen, welche in der Lage ist, unterschiedliche Beleuchtungsfunktionen mit technisch einfachen Mitteln bereitzustellen.

Diese Aufgabe wird durch eine Beleuchtungsvorrichtung mit den Merkmalen von Anspruch 1 gelöst. Bevorzugte Ausführungen sind in den abhängigen Ansprüchen angegeben.

### Kurzdarstellung der Erfindung

Erfindungsgemäß weist das Gehäuse einen Befestigungsabschnitt auf, welcher zur Befestigung eines Lichtleitelements, insbesondere eines Lichtleiters oder einer Lichtleitfaser, an dem Gehäuse eingerichtet ist, wobei das zweite Leuchtmittel relativ zu dem Befestigungsabschnitt derart angeordnet ist, dass in einem Befestigungszustand, in dem ein Lichtleitelement an dem Befestigungsabschnitt des Gehäuses befestigt ist, von dem zweiten Leuchtmittel erzeugtes und entlang der zweiten Lichtabstrahlrichtung abgestrahltes Licht auf einen Lichteinkoppelabschnitt des Lichtleitelements trifft, wobei auftreffendes Licht über den Lichteinkoppelabschnitt in das Lichtleitelement einkoppelt, wobei im Befestigungszustand ein Außenabschnitt des Lichtleitelements außerhalb des Gehäuseinnenraums des Gehäuses angeordnet ist, wobei bevorzugt der Außenabschnitt einen Lichtauskoppelabschnitt zur Auskopplung von in das Lichtleitelement eingekoppeltes Licht aufweist.

Dadurch ergibt sich der Vorteil, dass in ein und demselben Gehäuse das erste Leuchtmittel für Kraftfahrzeug-Lichtfunktionen und das zweite Leuchtmittel für die Beleuchtung von Kraftfahrzeug-Komponenten aufgenommen sind. Damit entfällt die Notwendigkeit eines separaten Gehäuses (mit eigener Steuerung, Befestigung, usw.) für das zweite Leuchtmittel. Im Befestigungszustand des Lichtleitelements kann dieses beispielsweise eine dekorative Lichtfunktion einer Kraftfahrzeug-Komponente, beispielsweise ein Kühlergrill oder eine dekorative Blende an einer Innen- oder Außenseite des Kraftfahrzeugs, bereitstellen. Durch die erfindungsgemäße Lösung wird keine zusätzliche Beleuchtungsvorrichtung mit einem eigenen Gehäuse benötigt.

Es kann vorgesehen sein, dass zur Befestigung des Lichtleitelements an dem Gehäuse der Befestigungsabschnitt ein Befestigungsmittel aufweist, welches dazu eingerichtet ist, mit einer das Lichtleitelement begrenzenden Außenfläche des Lichtleitelements, oder mit einer an einem Endabschnitt des Lichtleitelements angeordneten Ferrule, in Eingriff gebracht zu werden, wobei durch den Eingriff das Lichtleitelement an dem Befestigungsabschnitt befestigt ist, wobei vorzugsweise im Befestigungszustand eine mechanische Verbindung zwischen dem Lichtleitelement und dem Gehäuse ausgebildet ist.

Es kann vorgesehen sein, dass der Befestigungsabschnitt eine Einführöffnung durch die Abschlussscheibe hindurch aufweist, wobei die Einführöffnung zu einem Einführabschnitt eines an dem Gehäuse befestigbaren Lichtleitelements korrespondierend ausgestaltet ist, wobei der Einführabschnitt den Lichteinkoppelabschnitt des Lichtleitelements aufweist, wobei zur Befestigung des Lichtleitelements an der Abschlussscheibe des Gehäuses der Einführabschnitt des Lichtleitelements, entlang einer Einführrichtung, in die Einführöffnung des Befestigungsabschnitts einführbar ist, wobei der Befestigungsabschnitt ein Befestigungsmittel, beispielsweise eine mechanische Kappe oder eine Klebeverbindung, aufweist, welches dazu eingerichtet ist, das Lichtleitelement im eingeführten Zustand an dem Befestigungsabschnitt derart zu befestigen, dass eine Bewegung des Lichtleitelements gegen der Einführrichtung blockiert ist.

Es kann vorgesehen sein, dass der Befestigungsabschnitt eine Einführöffnung durch den Gehäusekörper hindurch aufweist, wobei die Einführöffnung zu einem Einführabschnitt eines an dem Gehäuse befestigbaren Lichtleitelements korrespondierend ausgestaltet ist, wobei der Einführabschnitt den Lichteinkoppelabschnitt des Lichtleitelements aufweist, wobei zur Befestigung des Lichtleitelements an dem Gehäusekörper des Gehäuses der Einführabschnitt des Lichtleitelements, entlang einer Einführrichtung, in die Einführöffnung des Befestigungsabschnitts einführbar ist, wobei der Befestigungsabschnitt ein Befestigungsmittel aufweist, welches dazu eingerichtet ist, das Lichtleitelement im eingeführten Zustand an dem Befestigungsabschnitt derart zu befestigen, dass eine Bewegung des Lichtleitelements gegen der Einführrichtung blockiert ist.

Es kann vorgesehen sein, dass das zweite Leuchtmittel in dem Gehäuse relativ zu der Abschlussscheibe derart angeordnet ist, dass die Abschlussscheibe frei von Licht des zweiten Leuchtmittels ist, oder, wobei das zweite Leuchtmittel oder der Befestigungsabschnitt ein Abschattungselement aufweist, welches dazu eingerichtet ist, Streulicht des zweiten Leuchtmittels derart zu blockieren, dass ein Bereich der Abschlussscheibe um die Einführöffnung herum frei von Licht des zweiten Leuchtmittels ist, wobei insbesondere Licht des zweiten Leuchtmittels ausschließlich auf den Lichteinkoppelabschnitt des Lichtleitelements trifft.

Es kann vorgesehen sein, dass der Befestigungsabschnitt ein Dichtungsmittel aufweist, welches dazu eingerichtet ist, im Befestigungszustand die Einführöffnung, insbesondere gegen ein Eindringen von Fluiden und/oder Partikeln in das Innere des Gehäuses, abzudichten.

Es kann vorgesehen sein, dass der Befestigungsabschnitt zur Ausbildung des Befestigungszustands ein Halteelement aufweist, welches an der Abschlussscheibe angeordnet und zur Aufnahme und zum Halten, eines Einführabschnitts des an dem Gehäuse befestigbaren Lichtleitelements eingerichtet ist, wobei das Halteelement derart ausgestaltet ist, dass im Befestigungszustand der Lichteinkoppelabschnitt des Lichtleitelements an einer Außenseite der Abschlussscheibe angrenzt, wobei vorzugsweise der Lichteinkoppelabschnitt die Außenseite, insbesondere vollflächig, kontaktiert, wobei das zweite Leuchtmittel derart in dem Gehäuse angeordnet ist, dass von dem zweiten Leuchtmittel abgestrahltes Licht, durch die Abschlussscheibe hindurch auf den Lichteinkoppelabschnitt des Lichtleitelements trifft.

Es kann vorgesehen sein, dass sich das Halteelement von der Außenseite der Abschlussscheibe, welche einer dem zweiten Leuchtmittel zugewandten Innenseite der Abschlussscheibe abgewandt ist, wegerstreckt, wobei das Halteelement eine zur Aufnahme des Einführabschnitts und zur Ausrichtung des Lichteinkoppelabschnitts relativ zum zweiten Leuchtmittel korrespondierende Form aufweist, wobei das Halteelement dazu eingerichtet ist, im Befestigungszustand den Lichteinkoppelabschnitt des Lichtleitelements in einem bestimmtem Abstand, entlang der zweiten Lichtabstrahlrichtung, relativ zu dem zweiten Leuchtmittel auszurichten und zu halten, wobei das zweite Leuchtmittel an der Innenseite der Abschlussscheibe dem Lichteinkoppelabschnitt gegenüberliegend angeordnet ist, sodass vorzugsweise im Befestigungszustand im Wesentlichen das gesamte von zweiten Leuchtmittel abgestrahlte Licht auf den Lichteinkoppelabschnitt trifft.

Es kann vorgesehen sein, dass die Einführrichtung im Wesentlichen gegenläufig, insbesondere antiparallel, zur zweiten Lichtabstrahlrichtung orientiert ist, wobei vorzugsweise das erste Leuchtmittel relativ zu dem zweiten Leuchtmittel derart angeordnet ist, dass die erste Lichtabstrahlrichtung und die zweite Lichtabstrahlrichtung einen Winkel von zumindest 45°, bevorzugt zumindest 90°, einschließen.

Es kann vorgesehen sein, dass die Beleuchtungsvorrichtung eine Steuervorrichtung aufweist, welche mit dem ersten Leuchtmittel und dem zweiten Leuchtmittel steuerungstechnisch verbunden und dazu eingerichtet ist, das erste Leuchtmittel und das zweite Leuchtmittel unabhängig voneinander anzusteuern.

Es kann vorgesehen sein, dass die Steuervorrichtung innerhalb des Gehäuses angeordnet ist.

Es kann vorgesehen sein, dass die Beleuchtungsvorrichtung als Kraftfahrzeugscheinwerfer ausgestaltet ist.

Gemäß einem weiteren Aspekt der Erfindung ist ein System vorgesehen, umfassend zumindest eine Beleuchtungsvorrichtung, ein Lichtleitelement und eine

Kraftfahrzeugkomponente, insbesondere eine Karosseriekomponente, beispielsweise ein Kühlergrill, wobei das Lichtleitelement an dem Befestigungsabschnitt des Gehäuses befestigt ist, wobei das Lichtleitelement einen Lichtauskoppelabschnitt aufweist, welcher der Kraftfahrzeugkomponente derart zugeordnet ist, dass aus dem Lichtauskoppelabschnitt ausgekoppeltes Licht, welches von dem zweiten Leuchtmittel erzeugt, in das Lichtleitelement eingekoppelt und sich innerhalb des Lichtleitelements, entlang einer Lichtleitrichtung, zum Lichtauskoppelabschnitt hin ausbreitet, die Kraftfahrzeugkomponente beleuchtet oder, wobei das Lichtleitelement der Kraftfahrzeugkomponente derart zugeordnet ist, dass sich aus dem Lichtauskoppelabschnitt ausgekoppeltes Licht in einer Richtung ausbreitet, welche von der Kraftfahrzeugkomponente weg verläuft.

Es kann vorgesehen sein, dass das System zwei Beleuchtungsvorrichtungen umfasst, beispielsweise zwei Kraftfahrzeugscheinwerfer, wobei die Kraftfahrzeugkomponente, beispielsweise ein Kühlergrill oder eine Kraftfahrzeugblende, insbesondere eine Kraftfahrzeug-Frontblende, welche bevorzugt zwischen den zwei Beleuchtungsvorrichtungen an einem Kraftfahrzeug befestigbar ist, von einem ersten Lichtleitelement einer ersten Beleuchtungsvorrichtung und von einem zweiten Lichtleitelement einer zweiten Beleuchtungsvorrichtung beleuchtet wird, wobei bevorzugt das erste Lichtleitelement und das zweite Lichtleitelement eine gegenläufige Lichtleitrichtung aufweisen.

Es kann ein Kraftfahrzeug vorgesehen sein, umfassend eine Beleuchtungsvorrichtung oder ein System.

### Kurzbeschreibung der Figuren

Nachfolgend wird die Erfindung anhand von beispielhaften Zeichnungen näher erläutert. Hierbei zeigt
Fig. 1 eine schematische Schnittansicht eines ersten Ausführungsbeispiels einer erfindungsgemäßen Beleuchtungsvorrichtung;
Fig. 2 eine schematische Schnittansicht eines zweiten Ausführungsbeispiels einer erfindungsgemäßen Beleuchtungsvorrichtung;
Fig. 3 eine schematische Schnittansicht eines dritten Ausführungsbeispiels einer erfindungsgemäßen Beleuchtungsvorrichtung;
Fig. 4 eine schematische Detailansicht einer ersten Variante eines Befestigungsabschnitts;
Fig. 5 eine schematische Detailansicht einer zweiten Variante eines Befestigungsabschnitts;
Fig. 6 eine schematische Detailansicht einer dritten Variante eines Befestigungsabschnitts;
Fig. 7 eine schematische Detailansicht einer vierten Variante eines Befestigungsabschnitts.

### Eingehende Beschreibung der Ausführungsformen

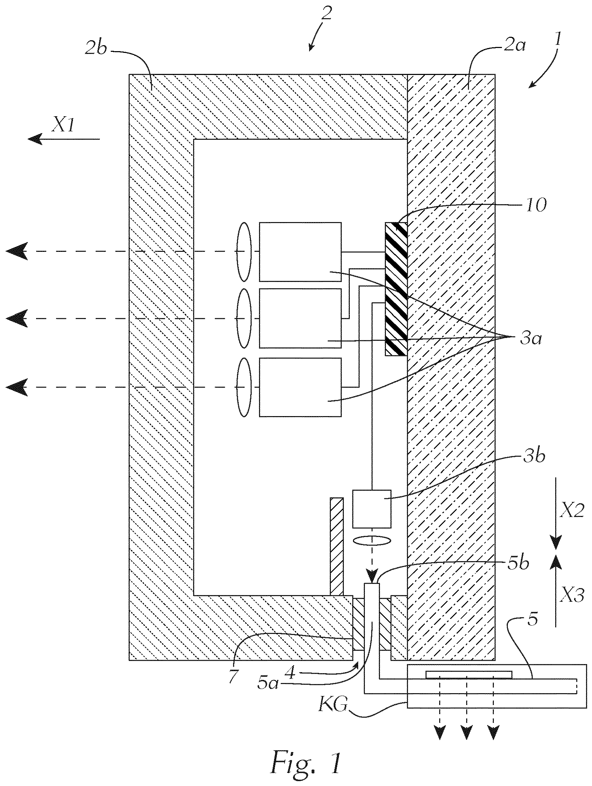

**Fig. 1** zeigt ein erstes Ausführungsbeispiel einer Beleuchtungsvorrichtung 1 für ein Kraftfahrzeug. Die Beleuchtungsvorrichtung 1 umfasst ein Gehäuse 2 mit einem Gehäuseinnenraum. Das Gehäuse 2 umfasst einen, insbesondere für sichtbares Licht, intransparenten Gehäusekörper 2a und eine, insbesondere für sichtbares Licht, transparente Abschlussscheibe 2b. Der Gehäusekörper 2a und die Abschlussscheibe 2b bilden das Gehäuse 2 aus und umschließen den Gehäuseinnenraum.

Innerhalb des Gehäuseinnenraums des Gehäuses 2 ist ein erstes Leuchtmittel 3a angeordnet, welches dazu eingerichtet ist, Licht zu erzeugen und entlang einer ersten Lichtabstrahlrichtung x1, welche zur Abschlussscheibe 2b hin orientiert ist, abzustrahlen. Das erste Leuchtmittel 3a ist zur Erzeugung einer Lichtfunktion, insbesondere einer Kraftfahrzeugscheinwerfer- Lichtfunktion, beispielsweise ein Abblendlicht oder ein Fernlicht, eingerichtet. Das erste Leuchtmittel 3a ist derart in dem Gehäuse 2 angeordnet, dass die Lichtfunktion ausbildendes Licht, ausgehend von dem ersten Leuchtmittel 3a, entlang der ersten Lichtabstrahlrichtung x1, durch die Abschlussscheibe 2b hindurch, insbesondere in einen Verkehrsraum, abgestrahlt wird.

Innerhalb des Gehäuseinnenraums des Gehäuses 2 ist ein zweites Leuchtmittel 3b angeordnet, welches dazu eingerichtet ist, Licht zu erzeugen und entlang einer zweiten Lichtabstrahlrichtung x2, welche von der ersten Lichtabstrahlrichtung x1 unterschiedlich sein kann, abzustrahlen.

Das Gehäuse 2 umfasst einen Befestigungsabschnitt 4, welcher zur Befestigung eines Lichtleitelements 5, insbesondere eines Lichtleiters oder einer Lichtleitfaser, an dem Gehäuse 2 eingerichtet ist. Das zweite Leuchtmittel 3b ist relativ zu dem Befestigungsabschnitt 4 derart angeordnet, dass in einem Befestigungszustand, in dem ein Lichtleitelement 5 an dem Befestigungsabschnitt 4 des Gehäuses 2 befestigt ist (dieser Zustand ist in Fig. 1 gezeigt), von dem zweiten Leuchtmittel 3b erzeugtes und entlang der zweiten Lichtabstrahlrichtung x2 abgestrahltes Licht auf einen Lichteinkoppelabschnitt 5b des Lichtleitelements 5 trifft. Auftreffendes Licht wird über den Lichteinkoppelabschnitt 5b in das Lichtleitelement 5 einkoppelt. Im (gezeigten) Befestigungszustand ist ein Außenabschnitt des Lichtleitelements 5 außerhalb des Gehäuseinnenraums des Gehäuses 2 angeordnet ist. Der Außenabschnitt umfasst einen Lichtauskoppelabschnitt zur Auskopplung von in das Lichtleitelement 5 eingekoppeltes Licht. Aus dem Lichtauskoppelabschnitt ausgekoppeltes Licht kann beispielsweise zur Beleuchtung einer Kraftfahrzeugkomponente genutzt werden. In den Fig. 1 bis 3 ist beispielhaft schematisch ein Kühlergrill, welcher mit KG bezeichnet ist, als Kraftfahrzeugkomponente vorgesehen. Die drei Pfeile, welche sich von dem Lichtleitelement 5 vertikal nach unten erstrecken, symbolisieren Licht, welches aus dem Lichtleitelement 5 ausgekoppelt und auf den Kühlergrill KG abgestrahlt wird, um diesen zu beleuchten.

Zur Befestigung des Lichtleitelements 5 an dem Gehäuse 2 umfasst der Befestigungsabschnitt 4 ein Befestigungsmittel 6, welches dazu eingerichtet ist, mit einer das Lichtleitelement 5 begrenzenden Außenfläche des Lichtleitelements 5 (oder alternativ dazu mit einer an einem Endabschnitt des Lichtleitelements 5 angeordneten Ferrule), in Eingriff gebracht zu werden. Durch den Eingriff kann das Lichtleitelement 5 an dem Befestigungsabschnitt 4 befestigt werden. Im Befestigungszustand kann eine mechanische Verbindung bzw. Fixierung zwischen dem Lichtleitelement 5 und dem Gehäuse 2 ausgebildet sein.

Der Befestigungsabschnitt 4 weist eine Einführöffnung 7 durch die Abschlussscheibe 2b hindurch auf. Die Einführöffnung 7 ist zu einem Einführabschnitt 5a des an dem Gehäuse 2 befestigbaren Lichtleitelements 5 korrespondierend ausgestaltet. Der Einführabschnitt 5a umfasst den Lichteinkoppelabschnitt 5b des Lichtleitelements 5. Zur Befestigung des Lichtleitelements 5 an der Abschlussscheibe 2b des Gehäuses 2 ist der Einführabschnitt 5a des Lichtleitelements 5, entlang einer Einführrichtung x3, in die Einführöffnung 7 des Befestigungsabschnitts 4 eingeführt. Der Befestigungsabschnitt 4 umfasst ein Befestigungsmittel 6, beispielsweise eine mechanische Kappe oder eine Klebeverbindung, welches dazu eingerichtet ist, das Lichtleitelement 5 im eingeführten Zustand an dem Befestigungsabschnitt 4 zu befestigen, wodurch eine Bewegung des Lichtleitelements 5 gegen der Einführrichtung x3 blockiert ist. Im Befestigungszustand ist der Lichteinkoppelabschnitt 5b in einem bestimmten, vorgegebenen Abstand zum zweiten Leuchtmittel 3b angeordnet.

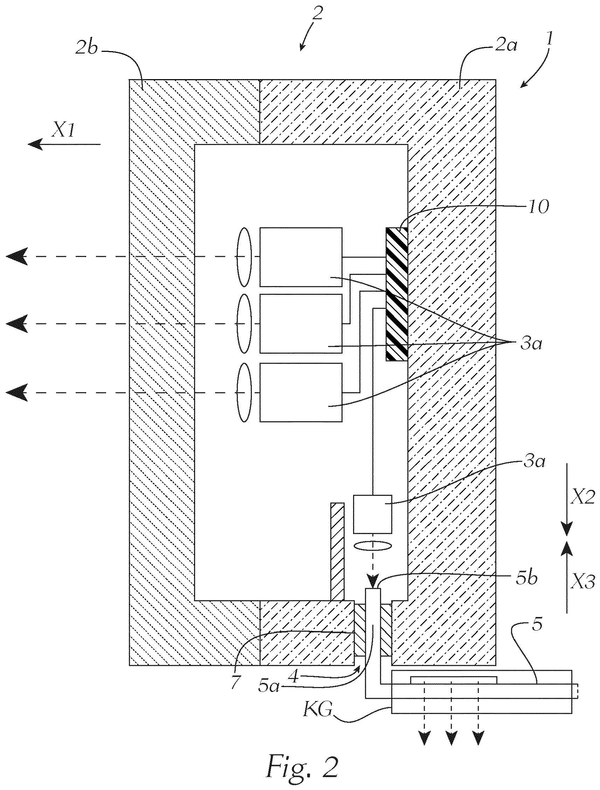

**Fig. 2** zeigt ein zweites Ausführungsbeispiel, bei welchem der Befestigungsabschnitt 4 eine Einführöffnung 7 durch den Gehäusekörper 2a hindurch aufweist. Die Einführöffnung 7 ist, analog zum ersten Ausführungsbeispiel, zu dem Einführabschnitt 5a des an dem Gehäuse 2 befestigbaren Lichtleitelements 5 korrespondierend ausgestaltet. Der Einführabschnitt 5a weist den Lichteinkoppelabschnitt 5b des Lichtleitelements 5 auf. Zur Befestigung des Lichtleitelements 5 an dem Gehäusekörper 2a des Gehäuses 2 ist der Einführabschnitt 5a des Lichtleitelements 5b, entlang einer Einführrichtung x3, in die Einführöffnung 7 des Befestigungsabschnitts 4 eingeführt. Der Befestigungsabschnitt 4 umfasst ein Befestigungsmittel 6, welches dazu eingerichtet ist, das Lichtleitelement 5 im eingeführten Zustand an dem Befestigungsabschnitt 4 derart zu befestigen, dass eine Bewegung des Lichtleitelements 5 gegen der Einführrichtung x3 blockiert ist.

Das zweite Leuchtmittel 3b ist in dem Gehäuse 2 (bzw. innerhalb des Gehäuseinnenraums) relativ zu der Abschlussscheibe 2b derart angeordnet, dass die Abschlussscheibe 2b frei von Licht des zweiten Leuchtmittels 3b ist. Das zweite Leuchtmittel 3b oder der Befestigungsabschnitt 4 können auch ein Abschattungselement 11 aufweisen, welches dazu eingerichtet ist, Streulicht des zweiten Leuchtmittels 3b zu blockieren, wodurch ein Bereich der Abschlussscheibe um die Einführöffnung 7 herum frei von Licht des zweiten Leuchtmittels 3b ist. Bevorzugt ist das zweite Leuchtmittel 3b zu dem befestigten Lichtleitelement 5 (ggfs. unter Zusammenwirken des Abschattungselement 11) derart angeordnet, dass das Licht des zweiten Leuchtmittels 3b ausschließlich auf den Lichteinkoppelabschnitt 5b des Lichtleitelements 5 trifft. Der Befestigungsabschnitt 4 kann ein Dichtungsmittel 8 aufweisen, welches dazu eingerichtet ist, im Befestigungszustand die Einführöffnung 7 gegen ein Eindringen von Fluiden und/oder Partikeln in das Innere des Gehäuses 2 abzudichten.

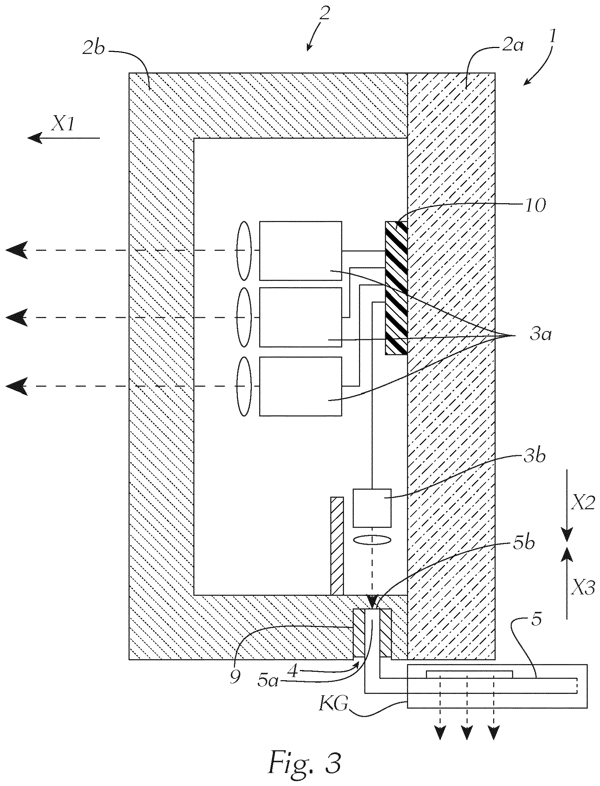

**Fig. 3** zeigt ein drittes Ausführungsbeispiel, bei welchem der Befestigungsabschnitt 4 zur Ausbildung des Befestigungszustands ein Halteelement 9 aufweist. Das Halteelement 9 ist an der Abschlussscheibe 2b angeordnet und dient zur Aufnahme und zum Halten eines Einführabschnitts 5a des an dem Gehäuse 2 befestigbaren Lichtleitelements 5. Im Unterschied zu dem ersten Ausführungsbeispiel und dem zweiten Ausführungsbeispiel ist keine Durchgangsöffnung vorgesehen. Das Halteelement 9 ist derart ausgestaltet, dass im Befestigungszustand der Lichteinkoppelabschnitt 5b des Lichtleitelements 5 an einer Außenseite der Abschlussscheibe 2b angrenzt. Dabei kann der Lichteinkoppelabschnitt 5b die Außenseite, insbesondere vollflächig, kontaktieren. Das zweite Leuchtmittel 3b ist bei diesem Ausführungsbeispiel derart in dem Gehäuse 2 angeordnet, dass von dem zweiten Leuchtmittel 3b abgestrahltes Licht, durch die Abschlussscheibe 2b hindurch auf den Lichteinkoppelabschnitt 5b des Lichtleitelements (5) trifft.

Das Halteelement 9 erstreckt sich von der Außenseite der Abschlussscheibe 2b, welche einer dem zweiten Leuchtmittel 3b zugewandten Innenseite der Abschlussscheibe 2b abgewandt ist, hin zur Innenseite und ist als Sackloch ausgestaltet. Das Halteelement 9 kann sich alternativ dazu auch von der Außenseite der Abschlussscheibe 2b wegerstrecken. Das Halteelement 9 hat eine zur Aufnahme des Einführabschnitts 5a und zur Ausrichtung des Lichteinkoppelabschnitts 5b relativ zum zweiten Leuchtmittel 3b korrespondierende Form. Das Halteelement 9 ist dazu eingerichtet, im Befestigungszustand den Lichteinkoppelabschnitt 5b des Lichtleitelements 5 in einem bestimmten Abstand, entlang der zweiten Lichtabstrahlrichtung x2, relativ zu dem zweiten Leuchtmittel 3b auszurichten und zu halten. Das zweite Leuchtmittel 3b ist an der Innenseite der Abschlussscheibe 2b gegenüberliegend zum Lichteinkoppelabschnitt 5b angeordnet ist, sodass im Befestigungszustand im Wesentlichen das gesamte von zweiten Leuchtmittel 3b abgestrahlte Licht auf den Lichteinkoppelabschnitt 5b trifft.

In allen Ausführungsbeispielen ist die Einführrichtung x3 im Wesentlichen gegenläufig, insbesondere antiparallel, zur zweiten Lichtabstrahlrichtung x2 orientiert. Das erste Leuchtmittel 3a kann relativ zu dem zweiten Leuchtmittel 3b derart angeordnet sein, dass die erste Lichtabstrahlrichtung x1 und die zweite Lichtabstrahlrichtung x2 einen Winkel von zumindest 45°, bevorzugt zumindest 90°, einschließen. Die Beleuchtungsvorrichtung 1 kann eine Steuervorrichtung 10 aufweisen, welche mit dem ersten Leuchtmittel 3a und dem zweiten Leuchtmittel 3b steuerungstechnisch verbunden und dazu eingerichtet ist, das erste Leuchtmittel 3a und das zweite Leuchtmittel 3b unabhängig voneinander anzusteuern. Die Steuervorrichtung 10 kann innerhalb des Gehäuses 2 angeordnet sein.

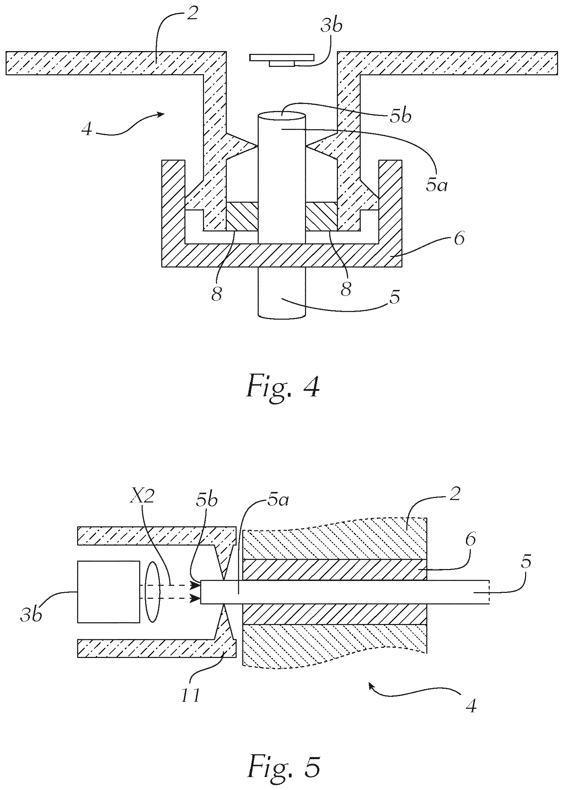

**Fig. 4** zeigt eine Variante eines Befestigungsabschnitts 4. Das zweite Leuchtmittel 3b ist in einem bestimmten Abstand zum Lichteinkoppelabschnitt 5b des Lichtleitelements 5 angeordnet, der wiederum an dem Gehäuse 2 befestigt ist. Das Befestigungsmittel 6 befestigt den Einführabschnitt 5a des Lichtleitelements 5 am Gehäuse 2. Ein Dichtungsmittel 8 dichtete die Befestigungsstelle des Lichtleitelements 5 ab.

**Fig. 5** zeigt eine Detailansicht des erstes Ausführungsbeispiels, bei welchem die Einführöffnung 7 durch die Abschlussscheibe 2b hindurch verläuft. Der Einführabschnitt 5a des Lichtleitelements 5 ist mit einem Befestigungsmittel 6, in diesem Beispiel eine Klebstoffschicht, welche um den Einführabschnitt 5a herum ausgebildet ist, befestigt. Um das zweite Leuchtmittel 3b herum ist ein (optionales) Abschattungselement 11 angeordnet.

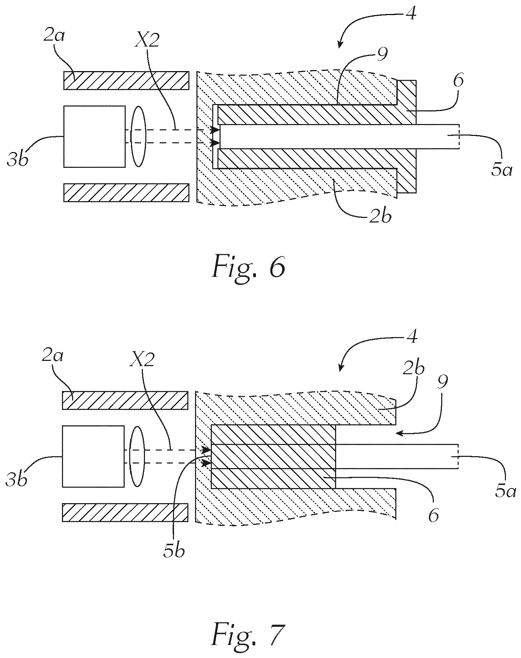

**Fig. 6** zeigt eine weitere Variante eines Befestigungsabschnitts 4. An der Außenseite der Abschlussscheibe 2b ist das Halteelement 9 in Form eines Sacklochs ausgebildet, in welchem der Einführabschnitt 5a des Lichtleitelements 5 ist mit einem Befestigungsmittel 6 befestigt ist. Das Befestigungsmittel 6 ist als Befestigungshülse, welche den Einführabschnitt 5a ummantelt, ausgestaltet. Zwischen dem Lichteinkoppelabschnitt 5b des Lichtleitelements 5 und dem Ende des Halteelements 9 (jenes Ende, welches dem zweiten Leuchtmittel 3b zugewandt ist; mit anderen Worten, der Boden des Sacklochs) ist ein Luftspalt ausgebildet.

**Fig. 7** zeigt eine abgeänderte Variante des in Fig. 6 gezeigten Befestigungsabschnitts 4. Das Befestigungsmittel 6 ist in diesem Fall ein transparenter Klebstoff, in welchen der Einführabschnitt 5a eingebettet ist. Der Lichteinkoppelabschnitt 5b kontaktiert das Ende des Halteelements 9 vollflächig.

Die Verwendung eines transparenten Klebstoffs als Befestigungsmittel 6 kann bei allen Ausführungsbeispielen vorgesehen sein. Ebenso kann die Verwendung eines Abschattungselements 11 bei allen Ausführungsbeispielen vorgesehen sein.

Im Rahmen dieser Beschreibung sind die Begriffe "oben", "unten", "horizontal", "vertikal" als Angaben der Ausrichtung zu verstehen, wenn die Beleuchtungsvorrichtung in normaler Benutzungsstellung angeordnet ist, nachdem sie in einem Kraftfahrzeug eingebaut wurde.

Bei den gezeigten Ausführungsbeispielen werden für gleiche Merkmale die gleichen Bezugszeichen verwendet.

### LISTE DER BEZUGSZEICHEN

- 1: Beleuchtungsvorrichtung
- 2: Gehäuse
- 2a: Gehäusekörper
- 2b: Abschlussscheibe
- 3a: erstes Leuchtmittel
- 3b: zweites Leuchtmittel
- 4: Befestigungsabschnitt
- 5: Lichtleitelement
- 5a: Einführabschnitt
- 5b: Lichteinkoppelabschnitt
- 6: Befestigungsmittel
- 7: Einführöffnung
- 8: Dichtungsmittel
- 9: Halteelement
- 10: Steuervorrichtung
- 11: Abschattungselement
- KG: Kühlergrill
- X1: erste Lichtabstrahlrichtung
- X2: zweite Lichtabstrahlrichtung
- X3: Einführrichtung

## Patentansprüche

1. Beleuchtungsvorrichtung (1) für ein Kraftfahrzeug, wobei die Beleuchtungsvorrichtung (1) Folgendes umfasst:
ein Gehäuse (2) mit einem Gehäuseinnenraum, wobei das Gehäuse (2) einen, insbesondere für sichtbares Licht, intransparenten Gehäusekörper (2a) und eine, insbesondere für sichtbares Licht, transparente Abschlussscheibe (2b) umfasst, wobei der Gehäusekörper (2a) und die Abschlussscheibe (2b) das Gehäuse (2) ausbilden und den Gehäuseinnenraum umschließen,
ein erstes Leuchtmittel (3a), welches innerhalb des Gehäuseinnenraums des Gehäuses (2) angeordnet und dazu eingerichtet ist, Licht zu erzeugen und entlang einer ersten Lichtabstrahlrichtung (x1), welche zur Abschlussscheibe (2b) hin orientiert ist, abzustrahlen, wobei das erste Leuchtmittel (3a) zur Erzeugung einer Lichtfunktion, insbesondere einer Kraftfahrzeugscheinwerfer- Lichtfunktion, beispielsweise ein Abblendlicht oder ein Fernlicht, eingerichtet ist, wobei das erste Leuchtmittel (3a) derart in dem Gehäuse (2) angeordnet ist, dass die Lichtfunktion ausbildendes Licht, ausgehend von dem ersten Leuchtmittel (3a), entlang der ersten Lichtabstrahlrichtung (x1), durch die Abschlussscheibe (2b) hindurch, insbesondere in einen Verkehrsraum, abgestrahlt wird,
ein zweites Leuchtmittel (3b), welches innerhalb des Gehäuseinnenraums des Gehäuses (2) angeordnet und dazu eingerichtet ist, Licht zu erzeugen und entlang einer zweiten Lichtabstrahlrichtung (x2), welche vorzugsweise von der ersten Lichtabstrahlrichtung (x1) unterschiedlich ist, abzustrahlen,
**dadurch gekennzeichnet, dass**
das Gehäuse (2) einen Befestigungsabschnitt (4) aufweist, welcher zur Befestigung eines Lichtleitelements (5), insbesondere eines Lichtleiters oder einer Lichtleitfaser, an dem Gehäuse (2) eingerichtet ist, wobei das zweite Leuchtmittel (3b) relativ zu dem Befestigungsabschnitt (4) derart angeordnet ist, dass in einem Befestigungszustand, in dem ein Lichtleitelement (5) an dem Befestigungsabschnitt (4) des Gehäuses (2) befestigt ist, von dem zweiten Leuchtmittel (3b) erzeugtes und entlang der zweiten Lichtabstrahlrichtung (x2) abgestrahltes Licht auf einen Lichteinkoppelabschnitt (5b) des Lichtleitelements (5) trifft, wobei auftreffendes Licht über den Lichteinkoppelabschnitt (5b) in das Lichtleitelement (5) einkoppelt, wobei im Befestigungszustand ein Außenabschnitt des Lichtleitelements (5) außerhalb des Gehäuseinnenraums des Gehäuses (2) angeordnet ist, wobei bevorzugt der Außenabschnitt einen Lichtauskoppelabschnitt zur Auskopplung von in das Lichtleitelement (5) eingekoppeltes Licht aufweist.

2. Beleuchtungsvorrichtung (1) nach Anspruch 1, wobei zur Befestigung des Lichtleitelements (5) an dem Gehäuse (2) der Befestigungsabschnitt (4) ein Befestigungsmittel (6) aufweist, welches dazu eingerichtet ist, mit einer das Lichtleitelement (5) begrenzenden Außenfläche des Lichtleitelements (5) oder mit einer an einem Endabschnitt des Lichtleitelements (5) angeordneten Ferrule in Eingriff gebracht zu werden, wobei durch den Eingriff das Lichtleitelement (5) an dem Befestigungsabschnitt (4) befestigt ist, wobei vorzugsweise im Befestigungszustand eine mechanische Verbindung zwischen dem Lichtleitelement (5) und dem Gehäuse (2) ausgebildet ist.

3. Beleuchtungsvorrichtung (1) nach Anspruch 1 oder 2, wobei der Befestigungsabschnitt (4) eine Einführöffnung (7) durch die Abschlussscheibe (2b) hindurch aufweist, wobei die Einführöffnung (7) zu einem Einführabschnitt (5a) eines an dem Gehäuse (2) befestigbaren Lichtleitelements (5) korrespondierend ausgestaltet ist, wobei der Einführabschnitt (5a) den Lichteinkoppelabschnitt (5b) des Lichtleitelements (5) aufweist, wobei zur Befestigung des Lichtleitelements (5) an der Abschlussscheibe (2b) des Gehäuses (2) der Einführabschnitt (5a) des Lichtleitelements (5), entlang einer Einführrichtung (x3), in die Einführöffnung (7) des Befestigungsabschnitts (4) einführbar ist, wobei der Befestigungsabschnitt (4) ein Befestigungsmittel (6), beispielsweise eine mechanische Kappe oder eine Klebeverbindung, aufweist, welches dazu eingerichtet ist, das Lichtleitelement (5) im eingeführten Zustand an dem Befestigungsabschnitt (4) derart zu befestigen, dass eine Bewegung des Lichtleitelements (5) gegen der Einführrichtung (x3) blockiert ist.

4. Beleuchtungsvorrichtung (1) nach Anspruch 1 oder 2, wobei der Befestigungsabschnitt (4) eine Einführöffnung (7) durch den Gehäusekörper (2a) hindurch aufweist, wobei die Einführöffnung (7) zu einem Einführabschnitt (5a) eines an dem Gehäuse (2) befestigbaren Lichtleitelements (5) korrespondierend ausgestaltet ist, wobei der Einführabschnitt (5a) den Lichteinkoppelabschnitt (5b) des Lichtleitelements (5) aufweist, wobei zur Befestigung des Lichtleitelements (5) an dem Gehäusekörper (2a) des Gehäuses (2) der Einführabschnitt (5a) des Lichtleitelements (5b), entlang einer Einführrichtung (x3), in die Einführöffnung (7) des Befestigungsabschnitts (4) einführbar ist, wobei der Befestigungsabschnitt (4) ein Befestigungsmittel (6) aufweist, welches dazu eingerichtet ist, das Lichtleitelement (5) im eingeführten Zustand an dem Befestigungsabschnitt (4) derart zu befestigen, dass eine Bewegung des Lichtleitelements (5) gegen der Einführrichtung (x3) blockiert ist.

5. Beleuchtungsvorrichtung (1) nach Anspruch 3 oder 4, wobei das zweite Leuchtmittel (3b) in dem Gehäuse (2) relativ zu der Abschlussscheibe (2b) derart angeordnet ist, dass die Abschlussscheibe (2b) frei von Licht des zweiten Leuchtmittels (3b) ist, oder, wobei das zweite Leuchtmittel (3b) oder der Befestigungsabschnitt (4) ein Abschattungselement (11) aufweist, welches dazu eingerichtet ist, Streulicht des zweiten Leuchtmittels (3b) derart zu blockieren, dass ein Bereich der Abschlussscheibe um die Einführöffnung (7) herum frei von Licht des zweiten Leuchtmittels (3b) ist, wobei insbesondere Licht des zweiten Leuchtmittels (3b) ausschließlich auf einen Lichteinkoppelabschnitt (5b) des Lichtleitelements (5) trifft.

6. Beleuchtungsvorrichtung (1) nach Anspruch 3, 4 oder 5, wobei der Befestigungsabschnitt (4) ein Dichtungsmittel (8) aufweist, welches dazu eingerichtet ist, im Befestigungszustand die Einführöffnung (7), insbesondere gegen ein Eindringen von Fluiden und/oder Partikeln in das Innere des Gehäuses (2), abzudichten.

7. Beleuchtungsvorrichtung (1) nach Anspruch 1 oder 2, wobei der Befestigungsabschnitt (4) zur Ausbildung des Befestigungszustands ein Halteelement (9) aufweist, welches an der Abschlussscheibe (2b) angeordnet und zur Aufnahme und zum Halten, eines Einführabschnitts (5a) des an dem Gehäuse (2) befestigbaren Lichtleitelements (5) eingerichtet ist, wobei das Halteelement (9) derart ausgestaltet ist, dass im Befestigungszustand der Lichteinkoppelabschnitt (5b) des Lichtleitelements (5) an einer Außenseite der Abschlussscheibe (2b) angrenzt, wobei vorzugsweise der Lichteinkoppelabschnitt (5b) die Außenseite, insbesondere vollflächig, kontaktiert, wobei das zweite Leuchtmittel (3b) derart in dem Gehäuse (2) angeordnet ist, dass von dem zweiten Leuchtmittel (3b) abgestrahltes Licht, durch die Abschlussscheibe (2b) hindurch auf den Lichteinkoppelabschnitt (5b) des Lichtleitelements (5) trifft.

8. Beleuchtungsvorrichtung (1) nach Anspruch 7, wobei sich das Halteelement (9) von der Außenseite der Abschlussscheibe (2b), welche einer dem zweiten Leuchtmittel (3b) zugewandten Innenseite der Abschlussscheibe (2b) abgewandt ist, wegerstreckt, wobei das Halteelement (9) eine zur Aufnahme des Einführabschnitts (5a) und zur Ausrichtung des Lichteinkoppelabschnitts (5b) relativ zum zweiten Leuchtmittel (3b) korrespondierende Form aufweist, wobei das Halteelement (9) dazu eingerichtet ist, im Befestigungszustand den Lichteinkoppelabschnitt (5b) des Lichtleitelements (5) in einem bestimmtem Abstand, entlang der zweiten Lichtabstrahlrichtung (x2), relativ zu dem zweiten Leuchtmittel (3b) auszurichten und zu halten, wobei das zweite Leuchtmittel (3b) an der Innenseite der Abschlussscheibe (2b) dem Lichteinkoppelabschnitt (5b) gegenüberliegend angeordnet ist, sodass vorzugsweise im Befestigungszustand im Wesentlichen das gesamte von zweiten Leuchtmittel (3b) abgestrahlte Licht auf den Lichteinkoppelabschnitt (5b) trifft.

9. Beleuchtungsvorrichtung (1) nach einem der vorhergehenden Ansprüche, wobei die Einführrichtung (x3) im Wesentlichen gegenläufig, insbesondere antiparallel, zur zweiten Lichtabstrahlrichtung (x2) orientiert ist, wobei vorzugsweise das erste Leuchtmittel (3a) relativ zu dem zweiten Leuchtmittel (3b) derart angeordnet ist, dass die erste Lichtabstrahlrichtung (x1) und die zweite Lichtabstrahlrichtung (x2) einen Winkel von zumindest 45°, bevorzugt zumindest 90°, einschließen.

10. Beleuchtungsvorrichtung (1) nach einem der vorhergehenden Ansprüche, wobei die Beleuchtungsvorrichtung (1) eine Steuervorrichtung (10) aufweist, welche mit dem ersten Leuchtmittel (3a) und dem zweiten Leuchtmittel (3b) steuerungstechnisch verbunden und dazu eingerichtet ist, das erste Leuchtmittel (3a) und das zweite Leuchtmittel (3b) unabhängig voneinander anzusteuern.

11. Beleuchtungsvorrichtung (1) nach Anspruch 10, wobei die Steuervorrichtung (10) innerhalb des Gehäuses (2) angeordnet ist.

12. Beleuchtungsvorrichtung (1) nach einem der vorhergehenden Ansprüche, wobei die Beleuchtungsvorrichtung (1) als Kraftfahrzeugscheinwerfer ausgestaltet ist.

13. System, umfassend zumindest eine Beleuchtungsvorrichtung (1) nach einem der Ansprüche 1 bis 12, ein Lichtleitelement (5) und eine Kraftfahrzeugkomponente, insbesondere eine Karosseriekomponente, beispielsweise ein Kühlergrill (KG), wobei das Lichtleitelement (5) an dem Befestigungsabschnitt (4) des Gehäuses (2) befestigt ist, wobei das Lichtleitelement (5) einen Lichtauskoppelabschnitt aufweist, welcher der Kraftfahrzeugkomponente derart zugeordnet ist, dass aus dem Lichtauskoppelabschnitt ausgekoppeltes Licht, welches von dem zweiten Leuchtmittel (3b) erzeugt, in das Lichtleitelement (5) eingekoppelt und sich innerhalb des Lichtleitelements (5), entlang einer Lichtleitrichtung, zum Lichtauskoppelabschnitt hin ausbreitet, die Kraftfahrzeugkomponente beleuchtet oder, wobei das Lichtleitelement (5) der Kraftfahrzeugkomponente derart zugeordnet ist, dass sich aus dem Lichtauskoppelabschnitt ausgekoppeltes Licht in einer Richtung ausbreitet, welche von der Kraftfahrzeugkomponente weg verläuft.

14. System nach Anspruch 13, umfassend zwei Beleuchtungsvorrichtungen (1), beispielsweise zwei Kraftfahrzeugscheinwerfer, nach einem der Ansprüche 1 bis 12, wobei die Kraftfahrzeugkomponente, beispielsweise ein Kühlergrill (KG) oder eine Kraftfahrzeugblende, insbesondere eine Kraftfahrzeug-Frontblende, welche bevorzugt zwischen den zwei Beleuchtungsvorrichtungen (1) an einem Kraftfahrzeug befestigbar ist, von einem ersten Lichtleitelement (5) einer ersten Beleuchtungsvorrichtung (1) und von einem zweiten Lichtleitelement (5) einer zweiten Beleuchtungsvorrichtung (1) beleuchtet wird, wobei bevorzugt das erste Lichtleitelement (5) und das zweite Lichtleitelement (5) eine gegenläufige Lichtleitrichtung aufweisen.

15. Kraftfahrzeug, umfassend eine Beleuchtungsvorrichtung (1) nach einem der Ansprüche 1 bis 12 oder ein System nach Anspruch 13 oder 14.
